# EUROPÄISCHE PATENTSCHRIFT

(11) **EP 0 635 393 B1**
(45) Veröffentlichungstag und Bekanntmachung des Hinweises auf die Patenterteilung: **22.11.2000**
(21) Anmeldenummer: 94115978.2
(22) Anmeldetag: 10.01.1991
(51) Int. Cl.: B60N 2/24, B60N 2/44, A47C 7/18, A47C 31/02

(54) **Sitz, insbesondere für Fahrzeuge**
Vehicle seat
Siège pour véhicules

(30) Priorität: 18.01.1990 AT 10790; 15.02.1990 AT 35790
(43) Veröffentlichungstag der Anmeldung: 25.01.1995
(62) Teilanmeldung aus: 91902301.0
(73) Patentinhaber: Greiner Purtec GmbH, 4550 Kremsmünster (AT)
(72) Erfinder: Weingartner, Ing. Rudolf, A-4501 Neuhofen a.d. Krems (AT); Möseneder, Johann, A-4710 Grieskirchen (AT)
(74) Vertreter: Secklehner, Günter, Dr.

(56) Entgegenhaltungen:
- WO-A-88/09731

## Beschreibung

Die Erfindung betrifft einen Sitz mit einem Polster aus Schaumkunststoff wie er im Oberbegriff des Patentanspruches 1 beschrieben ist.

Ein bekannter Sitz mit einem Polster aus Schaumkunststoff - gemäß WO-A1 88/09731 der gleichen Anmelderin - besteht aus einem Schaumkunststoff mit einem Stützkörper aus einem offenzelligen, elastischen Kunststoffschaum mit einem ersten Raumgewicht und einer eigenen Flammschutzschicht aus einem offenzelligen, mit Flammschutzmittel versehenen, elastischen weiteren Schaumkunststoff mit einem zweiten, zum ersten unterschiedlichen Raumgewicht. Zwischen der Flammschutzschicht aus Schaumkunststoff und dem Stützkörper ist weiters eine flammfeste, aus gitter- bzw. netzförmig verlegten, hochtemperaturbeständigen Fasern bzw. Fäden gebildete Zwischenschicht angeordnet. Der Schaumkunststoff des Stützkörpers und die Flammschutzschicht sind miteinander, insbesondere durch einen Schäumvorgang verbunden und zusätzlich noch mit einem schwer entflammbaren Bezugstoff umgeben. Diese Polster haben sich in der Praxis an sich sehr gut bewährt, jedoch ist die Verbindung der einzelnen Teile der Flammschutzschicht hohen Belastungen ausgesetzt, die manchmal zu einer Zerstörung derselben führen. Weiters ist noch nachteilig, daß aufgrund der Anordnung mehrerer Schichten erhöhtet Aufwendungen bei der Fertigung entstehen und somit auch die Kosten für die Herstellung nicht mehr wirtschaftlich sind.

Weiters sind bereits Sitze für öffentliche Verkehrsmittel bekannt - gemäß DE-GM 85 06 816 - die einen Sitzpolster aufweisen, der mit einem Sitzbezug abgedeckt ist, wobei der Sitzbezug und der Sitzpolster aus einem schwer entflammbaren und raucharmen Material besteht Vielfach wird dabei so vorgegangen, daß zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, daß in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, daß eine Orientierung für Insassen kaum mehr möglich ist Dementsprechend ist bei diesem bekannten Sitz vorgesehen, daß unterhalb des Sitzpolsters in dem Traggestell des Sitzes eine feuerhemmende Platte angeordnet wird. Dies bedingt die Verwendung eines speziellen Profils zur Halterung des Sitzpolsters sowie einen zusätzlichen Aufwand durch die Anordnung der feuerhemmenden Platte. Auch bei dieser Ausführungsform konnte die Sitzbelüftung nicht befriedigen.

Sitze mit Polster aus Schaumkunststoff sind im modernen Fahrzeugbau sehr weit verbreitet. Vor allem werden sie in Schienen- und Straßenfahrzeugen aber in überwiegendem Maß auch in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch übertroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf den Polster ein, wonach die Flamme verlöscht bzw. entfernt wird. Der Polster wird, falls bis dahin die Rammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen und gleichzeitig auch einen hohen Sitzkomfort in den Sitzen bei den lang andauernden Flugreisen und ein geringes Gewicht zu erzielen, wurden Sitzpolster aus verschiedenen, mit Flammschutzmitteln versehenen, offenzelligen, elastischen Weichschaumstoffen mit unterschiedlichen Raumgewichten zusammengeklebt.

Ein derartiger bekannter Fahrzeugsitz - gemäß EP-A1 190 064 besteht aus mehreren Lagen Nadelvlies, die von einem flammfesten Bezugstoff umhüllt sind. Zwischen dem Bezugstoff und den einzelnen Lagen aus Nadelvlies sind zur Verringerung von Schäden durch Vandalen Verstärkungsmatten aus Metall bzw. Glasfasern angeordnet. Durch das Verkleben der einzelnen Schichten und die vielfachen Zwischenlagen dieser Vandalenschutzschicht ist bei dem bekannten Fahrzeugsitz eine ausreichende Durchlüftung noch schwerer erzielbar.

Bei einem anderen bekannten Sitz für Flugzeuge ist, um die komplizierte räumliche Formgebung der Sitzpolster einfacher zu realisieren, der Stützkörper aus einem mit Flammschutzmitteln versetzten in einer Form einstückig geschäumten Teil gebildet, dessen Oberfläche mit einer Flammschutzschicht und danach mit einem flammfesten Bezugstoff überzogen wird. Mit den bekannten Sitzen konnten jedoch die neuen verschärften Sicherheitsbestimmungen und Prüfvorschriften für Flugzeugsitze nicht erfüllt werden.

Bei einem weiteren bekannten Fahrzeugsitz - gemäß DE-A 31 11 839 - ist eine Hartschaumschale bzw. ein Auflagerahmen mit Spannfedern vorgesehen, auf dem ein aus einer oder mehreren Schaumauflagen bestehender Sitzpolster angeordnet ist. Die Schaumschichten können aus einem schwer entflammbarem Material bestehen. Der Sitzpolster ist mit einer Brandschutzhülle ummantelt und auf der dem Benutzer zugewandten Seite mit einem schwer entflammbaren Gewebeüberzug versehen. Durch die Verwendung schwer entflammbarer Materialien und dem Brandschutzüberzug wird zwar eine geringfügigere Verbesserung des Abbrandverhaltens erzielt, der Volumensverlust bei der Einwirkung einer offenen Flamme auf die verschiedenen Schaum stoffschichten kann durch einen derartigen Aufbau jedoch nicht verringert werden.

Der Erfindung liegt die Aufgabe zugrunde, einen Sitz für Fahrzeuge, insbesondere Verkehrsmittel, wie Schienenfahrzeuge bzw. Flugzeuge, zu schaffen, der bei möglichst geringem Gewicht eine ausreichende Luftdurchlässigkeit und ein günstiges Sitzklima ermöglicht und bei einer direkter Flammenbelastung über möglichst lange Zeit dem Abbrand bei geringer Rauchentwicklung einen hohen Widerstand entgegensetzen.

Diese Aufgabe der Erfindung auch durch die im Kennzeichenteil des Patentanspruches 1 enthaltenen Merkmale gelöst. Die Vorteile dieser neuen Lösung liegen darin, daß durch die Anordnung einer aus flammfesten Gewebe bzw. Gewirke oder Vlies bestehenden Deckschicht auf der Unterseite des Sitzpolsters das Gesamtgewicht des Sitzpolsters in vorteilhafter Weise bei nahezu unveränderten brand- bzw. rauchhemmenden Eigenschaften verringert werden kann. Gleichfalls werden aber auch die Herstellungskosten verringert, wobei die Verbindung zwischen dem Stützkörper und der Deckschicht in vorteilhafter Weise noch erhöht werden kann. Gleichzeitig wird aber die Widerstandsfestigkeit des Sitzpolsters gegenüber mechanischen Beanspruchungen in nicht vorhersehbarer Weise erhöht, da diese meist räumlich sehr komplex geformte Unterseite mit einer nahtlosen Deckschicht verkleidet werden kann. Gleichzeitig ist die Belastbarkeit dieser mit dem Stützkörper verbundenen Deckschicht gegen Zugbelastungen, wie sie von Haltevorrichtungen für den Bezugstoff auf diese Deckschicht aufgebracht werden, widerstandsfähiger als die zuvor in diesem Bereich eingesetzte Flammschutzschicht, da die teilweise punktförmig eingeleiteten Belastungen über eine größere Fläche der Deckschicht verteilt auch die Verbindungsschicht, beispielsweise die Kleberschicht zwischen der Deckschicht und dem Stützkörper übertragen wird. Weiters können durch die Überdeckung des Kantenbereiches auch die stirnseitigen Stoßstellen zwischen den einzelnen Lagen der Flammschutzschicht und den dort angeordneten Kleberschichten überdeckt werden, sodaß auch in diesen Bereichen ein Durchbrennen der Kleberschicht bei einer Flammenbelastung zuverlässig verhindert und ein Aufplatzen der Klebestellen bei starker Beanspruchung vermieden wird.

Eine weitere Ausbildung beschreibt Patentanspruch 2. Durch diese Ausbildung ist es ohne erhebliche Erhöhung des Gesamtgewichtes eines derartigen Sitzpolsters möglich, das Abbrandverhalten des Sitzpolsters auch bei einer Flammenbelastung von unterhalb des Sitzes zu verbessern.

Eine andere Weiterbildung nach Patentanspruch 3 ermöglicht eine partielle, gewichtssparende Verstärkung der Deckschicht zur Anpassung an die unterschiedlichen Belastungszonen, vor allem in jenen Bereichen, in welchen der Sitzpolster auf einem Traggestell aufliegt.

Vorteilhaft ist auch eine Ausführungsform nach Patentanspruch 4, da dadurch eine Dicke des Stützkörpers zwischen der der Deckschicht zugewandten Unterseite eines Federkerns und dieser Unterseite möglichst gering gehalten und trotzdem eine hohe Lebensdauer des Sitzpolsters erreicht werden kann.

Von Vorteil ist aber auch eine Ausbildung gemäß Patentanspruch 5. Durch die höhere Festigkeit der Zwischenschicht wird ein Durchbrennen derselben noch zusätzlich erschwert, da mit den beim Abbrand der Flammschutzschicht verbleibenden verkohlten Restmaterialien auf dem Netz bzw. Gitter der Zwischenschicht eine dichte Schutz- bzw. Rußschicht gebildet werden kann, die von den Flammen nicht so rasch durchdrungen wird.

Vorteilhaft ist aber auch eine Ausbildung nach Patentanspruch 6, da dadurch ein Zerschmelzen der tragenden Teile der Zwischenschicht vermieden und damit ein Zusammenfallen derselben verhindert wird.

Eine weitere vorteilhafte Ausbildung eines Sitzes ist im Patentanspruch 7 beschrieben. Durch diese Ausbildung ist es in überraschend einfacher Weise möglich, auch bei hohen Raumgewichten des Kunststoffschaumes, beispielsweise durch einen hohen Füllgrad mit pulverförmigen Flammschutzmitteln, das Gewicht des Polsters in einem gewünschten Rahmen zu halten bzw. die Festigkeitseigenschaften vor allem die Elastizität und Nachgiebigkeit sowie Standzeit des Polsters an die unterschiedlichen Wünsche anzupassen, wobei gleichzeitig die strengen Vorschriften hinsichtlich der Widerstandsfestigkeit gegen Feuer beibehalten werden.

Von Vorteil ist auch eine Ausbildung des Stützkörpers nach Patentanspruch 8, da dadurch dieser aus einem einstückigen Formteil beispielsweise in einer Schäumform entsprechend der gewünschten Raumform in einem Arbeitsgang hergestellt werden kann.

Zum besseren Verständnis der Erfindung wird diese nachfolgend anhand der in den Zeichnungen dargestellten Ausführungsbeispiele näher erläutert.

Es zeigen:
- Fig. 1: eine Doppelsitzbank mit zwei erfindungsgemäßen Sitzen für zwei Personen in schaubildlicher Darstellung;
- Fig. 2: einen Sitzpolster für eine Sitzfläche des Sitzes nach Fig. 1 in Seitenansicht:
- Fig. 3: den Sitzpolster für die Sitzfläche in Stirnansicht und im Schnitt gemäß den Linien III-III in Fig.2;
- Fig. 4: einen Teil des Sitzpolsters in Seitenansicht in größerem Maßstab, geschnitten gemäß den Linien IV-IV in Fig.3.
- Fig. 5: die Verbindungsbereiche in Stirnansicht und im Schnitt gemäß den Linien V-V in Fig.4;
- Fig. 6: eine Verbildungsvorrichtung mit einer Deckschicht in Draufsicht;
- Fig. 7: eine Verfahrensanordnung mit einer beheizbaren Preßmatrize in schematischer Darstellung;
- Fig. 8: eine auf einer Deckschicht aufgebrachte Verbindungsvorrichtung mit den erfindungsgemäßen Verbindungsbereichen in Draufsicht und vereinfachter schematischer Darstellung;
- Fig. 9: die Verbindungsvorrichtung nach Fig. 8 in Seitenansicht, geschnitten und mit der dieser zugeordneten Preßmatritze für die Verbindungsvorrichtungen in Seitenansicht und ebenfalls vereinfachter schematischer Darstellung;
- Fig. 10: eine andere Ausführungsvariante eines Sitzpolsters in Seitenansicht, teilweise geschnitten;
- Fig. 11: den Sitzpolster nach Fig. 10 in Draufsicht, teilweise geschnitten;
- Fig. 12: eine andere Ausführungsvariante eines Sitzpolsters in Stirnansicht geschnitten und vereinfachter schematischer Darstellung.

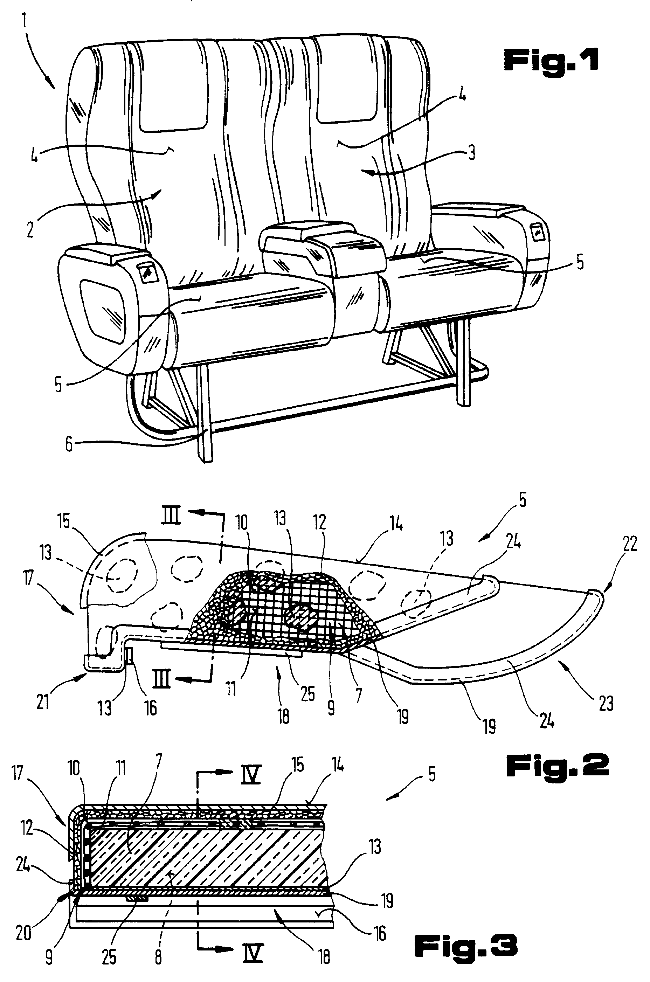

In Fig. 1 ist eine Doppelsitzbank 1 mit zwei Sitzen 2,3 dargestellt. Jeder Sitz 2,3 besteht aus einem Polster 4 für eine Rückenlehne und einem Sitzpolster 5 für eine Sitzfläche. Der Polster 4 und Sitzpolster 5 der beiden Sitze 2 und 3 sind identisch aufgebaut jedoch spiegelbildlich ausgebildet. Sie können aber auch für einen Einzelsitz oder eine Mehrfachsitzbank verwendet werden. Außerdem kann ein Sitz 2 oder 3 auch aus einem einzigen oder mehreren Polstern bestehen.

Die Polster 4 und Sitzpolster 5 werden in ein generell mit 6 bezeichnetes Traggestell eingelegt. Das Traggestell 6 kann auch jede beliebige andere Form aufweisen.

In Fig.2 und 3 ist der Sitzpolster 5 gezeigt, der eine Sitzfläche bildet. Der Sitzpolster 5 umfaßt einen Stützkörper 7, der bevorzugt aus einem Formkaltschaum besteht und in einer den gewünschten äußeren Abmessungen des Stützkörpers 7 entsprechenden Form hergestellt wird. Er besteht aus einem elastischen, offenzelligen Kunststoffschaum. Bevorzugt ist er einteilig ausgebildet. Der Kunststoffschaum kann wie schematisch durch kleine Striche im Bereich der Schraffur angedeutet mit einem pulverförmigen Flammschutzmittel 8, z.B. durch Melaminharz und bzw. oder Aluminiumhydroxyd, versetzt sein. Auf der Oberseite des Stützkörpers 7 ist eine Zwischenschicht 9 aus gitter- bzw. netzförmig verlegten, hochtemperaturfesten Fäden 10 und 11 angeordnet. Diese Zwischenschicht 9 wird von einer Flammschutzschicht 12, die auf der vom Stützkörper 7 abgewendeten Seite der Zwischenschicht 9 vorgesehen ist, abgedeckt. Diese Flammschutzschicht 12 ist mit einem flüssigen Flammschutzmittel getränkt. Das flüssige Flammschutzmittel ist z.B. chlor-, brom- oder phosphorhaltig. Vorteilhaft ist es, wenn das flüssige Flammschutzmittel mit Aluminiumoxydhydrat vermischt ist, dessen Korngrößenverteilung vorzugsweise zwischen 0,2 und 110 um beträgt. Diese Flammschutzschicht 12 besteht bevorzugt aus einem Polyäther, wobei der Schaumkunststoff einen Teil eines Kunststoffschaumblockes bildet, der nachträglich mit einem flüssigen Flammschutzmittel getränkt wird. Die Flammschutzschicht 12, die Zwischenschicht 9, und der Stützkörper 7 sind in über die Fläche verteilten Bereichen über einen Kleber 13 miteinander verbunden, sodaß der Luftdurchsatz des Sitzpolsters 5 durch den Kleber 13 nicht wesentlich nachteilig beeinflußt wird. Die Flammschutzschicht 12 ist auf der Sitzfläche 14 mit einem schwer entflammbaren Bezugstoff 15 abgedeckt. Die Verbindung des Bezugstoffes 15 mit dem Sitzpolster 5 erfolgt über Klettbänder 16, die im Bereich einer Vertiefung der Flammschutzschicht 12 angeordnet sein können. Die Zwischenschicht 9 und die Flammschutzschicht 12 umhüllen den Stützkörper 7 im Bereich der Sitzfläche 14, die der den Sitz benutzenden Person zugewandt ist, als auch im Bereich von Seitenflächen 17.

Der schwer entflammbare Bezugstoff 15 kann ebenfalls diese Flächen des Sitzpolsters 5 oder auch den gesamten überdecken, aber es ist, bedingt durch den erfindungsgemäßen Aufbau des Sitzpolsters 5 nunmehr auch möglich, in jenen Bereichen, die nicht einzusehen sind - wie beispielsweise unterhalb der Sitzbank - den schwer entflammbaren Bezugstoff wegzulassen.

Die Zwischenschicht 9, die beispielsweise auch durch ein Gewirke oder Gewebe oder Vlies, Netz oder Gitter gebildet sein kann, weist bevorzugt eine Maschenweite der gitter- bzw. netzförmig verlegten Fäden von ca. 0,5 bis 8 mm bevorzugt 3 mm auf.

Wie die Darstellungen in Fig.2 und 3 weiters zeigen, ist auf einer Unterseite 18 des Sitzpolsters 5 eine Deckschicht 19 angeordnet. Diese Deckschicht besteht aus einem flammfesten Gewebe bzw. Gewirke oder einem Vlies aus nichtbrennbaren bzw. schwerbrennbaren Fasern. Solche schwer entflammbaren Stoffe bestehen meist aus einer Verbindung zwischen Baumwolle und Polyester, z.B. 81 % Baumwolle und 19% Polyester oder auch aus 59% Wolle, 33% Baumwolle und 8% Polyester.

Die Deckschicht 19 ist mittels eines Klebers 13, beispielsweise einer durchgehenden Schicht oder, wie in Fig.2 für die Zwischenschicht 9 bzw. die Flammschutzschicht 12 gezeigt, über einzelne Klebepunkte mit dem Stützkörper 7 verbunden. Es ist selbstverständlich aber auch möglich, daß der Stützkörper 7 direkt auf diese Deckschicht 19 aufgeschäumt ist. Hierzu wäre die Deckschicht 19 vor der Herstellung des Stützkörpers 7 in eine entsprechende Schäumform einzulegen.

Als vorteilhaft hat es sich weiters erwiesen, wenn diese Deckschicht 19 Kanten 20 bis 23 zwischen den Seitenflächen 17 bzw. der Unterseite 18 übergreift bzw. überdeckt. Durch diese über die Seitenflächen 17 bzw. die Sitzfläche 14 vorragenden Teile 24 der Deckschicht 19 können die Schichten des Klebers 13 zwischen dem Stützkörper 7 bzw. der Deckschicht 19 und der Flammschutzschicht 12 bzw. dem Stützkörper 7 und gegebenenfalls der Zwischenschicht 9 abgedeckt werden. Dies verhindert bei einer Flammeneinwirkung, daß die Flammen durch das Entzünden des Klebers in das Innere des Sitzpolsters 5 eindringen können. Andererseits wird durch diese überlappende bzw. übergreifende Anordnung der Teile 24 der Deckschicht 19 ein Ablösen der Flammschutzschicht 12 bzw. der Zwischenschicht 9 vom Stützkörper 7 zuverlässig verhindert. Damit wird die Belastbarkeit des Sitzpolsters 5 vor allem beim Wechseln der flammfesten Bezugstoffe 15 erheblich erhöht und auch die Sicherheit der Passagiere im Falle eines Brandes im Beförderungsmittel, da auch bei länger im Einsatz befindlichen Sitzpolstern 5 die von den verschiedenen Prüfbehörden vorgeschriebenen Standzeiten der Sitzpolster eingehalten werden können.

Wie weiters ersichtlich ist, sind auf der vom Stützkörper 7 abgewendeten Seite der Deckschicht 19 die Klettbänder 16 einer Haltevorrichtung für den flammfesten Bezugstoff 15 angeordnet. Diese können bevorzugt über eine Schicht aus Kleber 13 mit der Deckschicht 19 verbunden sein. Der Vorteil dieser Lösung liegt darin, daß durch die über eine große Fläche mit dem Stützkörper 7 verbundene Deckschicht 19 eine hohe Festigkeit gegen Ablösungen der Deckschicht 19 durch die im Bereich des Klettbandes 16 beim Ablösen des flammfesten Bezugstoffes 15 auftretenden, teilweise punktuell auf kleine Bereiche begrenzten Zugkräfte vermieden wird.

Des weiteren ist es zum Schutz dieser Deckschicht 19 auch möglich, ebenfalls auf der vom Stützkörper 7 abgewendeten Seite Verstärkungsauflagen 25 vorzusehen, durch die verhindert werden kann, daß im Auflagebereich des Sitzpolsters 5 auf dem Traggestell 6 die Deckschicht 19 aufgescheuert bzw. zerstört oder aufgerissen wird.

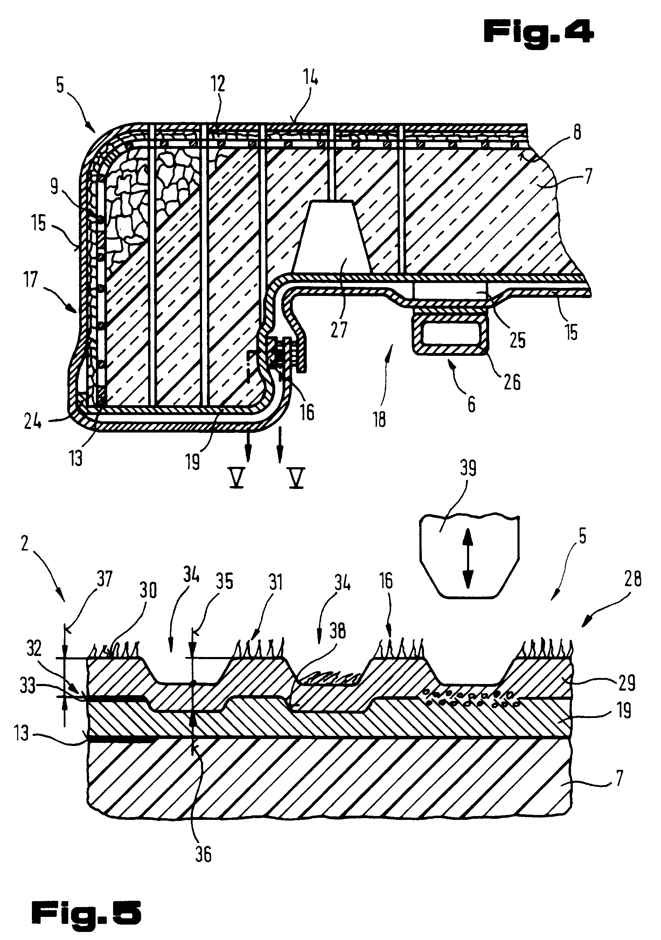

In Fig.4 ist im vergrößerten Maßstab der Sitzpolster 5 in seinem vorderen Eckbereich nochmals gezeigt. Aus dieser Darstellung ist auch besser ersichtlich, daß der Bezugstoff 15 über die die Seitenfläche 17 überdeckenden Teile 24 der Deckschicht 19 hinweggeführt ist. Weiters ist auch gezeigt, daß zusätzlich zu der Deckschicht 19 auf der Unterseite 18 des Sitzpolsters 5 auch ein flammfester Bezugstoff 15 angeordnet sein kann. Wie bereits anhand der Fig.3 beschrieben, kann es zweckmäßig sein, auf der Deckschicht 19 Verstärkungsauflagen 25 anzuordnen, über die die Deckschicht 19 auf einem Tragholm 26 des Traggestelles 6 abgestützt sein kann.

Des weiteren ist aus dieser Darstellung sehr gut ersichtlich, daß durch die die Seitenfläche 17 überragenden Teile 24 der Deckschicht 19 die Stirnseite der zwischen dem Stützkörper 7 und der Flammschutzschicht 12 angeordneten Schicht des Klebers geschützt werden kann.

Auch in dieser Ausführungsform ist das Flammschutzmittel 8 im Stützkörper 7 durch strichlierte Linien angedeutet.

Weiters ist in diesem Ausführungsbeispiel gezeigt, daß der Stützkörper 7 mit Ausnehmungen 27, beispielsweise Kavernen, versehen sein kann.

Des weiteren ist es auch möglich, beispielsweise nach Fertigstellung des Sitzpolsters 5 diesen mit Nadeln zu durchstechen, sodaß die im vorliegenden Ausführungsbeispiel in ihrem Durchmesser unverhältnismäßig groß dargestellten, durchgehenden Öffnungen gebildet werden können die der Wärme- und Feuchtigkeitsabfuhr aus dem Bereich der Sitzfläche 14 dienen.

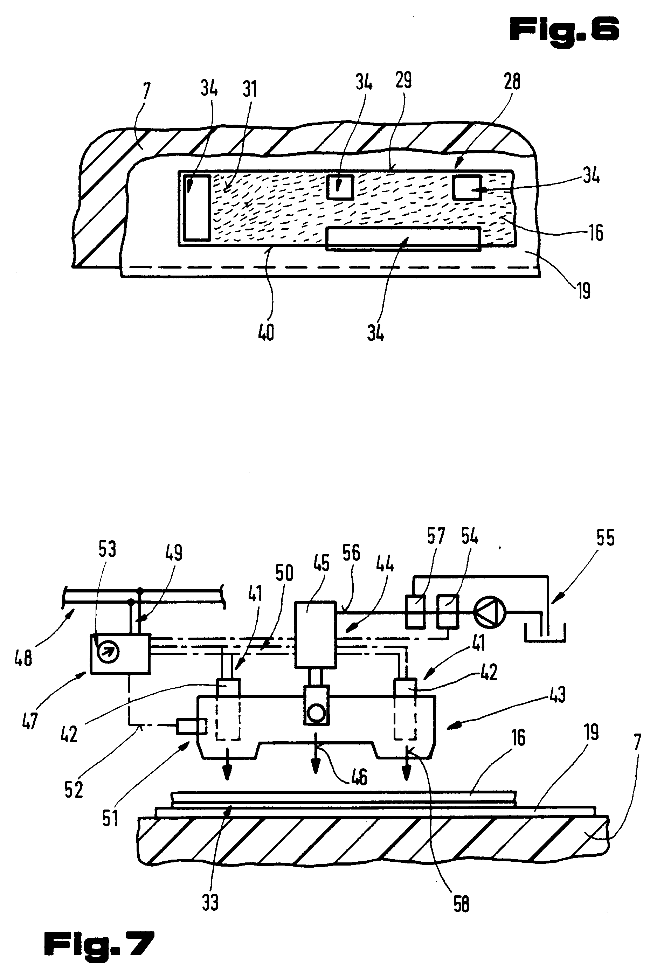

In Fig.5 ist eine Verbindungsvorrichtung 28 mit dem Klettband 16 gezeigt. Der Stützkörper 7 aus Schaumkunststoff ist mit der Deckschicht 19 mit dem Kleber 13 verbunden. Das Klettband 16 weist ein Trägerband 29 aus einem thermisch verformbaren Material, z.B. Polyamid, auf. An einer der Deckschicht 19 abgewandten Oberfläche 30 sind auf dem Trägerband 29 Verankerungsteile 31, z.B. ein widerhakenförmig ausgebildeter Flor aus Kunststoff oder Nylonfasern, angeordnet. An einer Verbindungsfläche 32 ist am Trägerband 29 der Deckschicht 19 zugewandt ein z.B. wärmeaktivierbarer Kleber 33 angeordnet. In Verbindungsbere`chen 34 ist das Trägerband 29 in Richtung der Deckschicht 19 thermisch verformt, wobei eine Tiefe 35 und eine Dicke 36 des Trägerbandes 29 im Verbindungsbereich größer ist als eine Dicke 37 des Trägerbandes 29 im ungeprägten Zustand, wodurch das Trägerband 29 und die Deckschicht 19 in den Verbindungsbereichen 34 in der Art einer Verzahnung ineinandergreifen und Seitenflächen 38 ausbilden.

Bei entsprechender Abstimmung der Temperatur für den Umformvorgang, entsprechend den verwendeten Materialien für das Trägerband 29, dem wärmeaktivierbaren Kleber 33 und der Deckschicht 19 werden diese in den Verbindungsbereichen 34 in eine zähflüssige Schmelze verwandelt bzw. plastifiziert, wodurch sich ein Ineinanderfließen der Materialien mit einer hohen Festigkeit der Verbindung nach dem Erstarren einstellt. Darüber hinaus kann der wärmeaktivierbare Kleber 33 mit einer Klebewirkung bei Raumtemperatur im Bereich der höheren Umformtemperatur eine Dünnflüssigkeit aufweisen, wodurch ein Eindringen sowohl in das Trägerband 29 als auch in die Deckschicht 19 erfolgt.

Wie weiters der Fig.5 zu entnehmen ist, können die Verankerungsteile 31 in den Verbindungsbereichen 34 durch die Temperatureinwirkung eines beheizbaren Stempels 39 thermisch umgeformt oder aber abgeschmolzen werden. Im letztgenannten Fall dringt die Schmelze in das gewebeförmige Grundmaterial der Deckschicht 19 ein und bewirkt nach der Erstarrung eine feste Schweißverbindung. Bei thermischer Umformung kann durch die Größe der Gesamtfläche die Haftkraft des Klettbandes verändert werden.

In Fig.6 ist die Verbindungsvorrichtung 28 mit einem Klettband 16 auf dem mit der Deckschicht 19 versehenen Stützkörper 7 gezeigt. Das Klettband 16 besteht aus dem Trägerband 29, z.B. aus thermisch verformbarem Kunststoff, und den darauf angeordneten Verankeringsteilen 31. In den Verbindungsbereichen 34 sind die Verankerungsteile 31 nach der Beaufschlagung der Verbindungsbereiche 34 mit Druck und Temperatur abgeschmolzen und als Schmelze in das Grundmaterial des Trägerbandes 29 und der Deckschicht 19 eingeschmolzen.

Die Verbindungsbereiche 34 können in beliebiger Rasterform angeordnet werden. So ist es z.B. möglich, die Verbindungsbereiche 34 innerhalb des durch das Klettband 16 gebildeten Umrisses, aber auch eine Seitenkante 40 des Klettbandes 16 überdeckend anzuordnen. Die Haltbarkeit und damit die Ausreißfestigkeit der Verbindungsvorrichtung 28 kann somit durch die Anzahl, die Anordnung und die Größe der Verbindungsbereiche 34 festgelegt werden. Es ist damit aber auch möglich, die Anzahl der Verankerungsteile 31, welche die Haftkraft zweier zusammenwirkender Klettbänder bestimmen, durch das bereichsweise Abschmelzen bzw. Uniformen zu beeinflussen, um gegebenenfalls die Haltekraft zu reduzieren und damit ein leichteres Lösen des Bezugstoffes 15 zu ermöglichen.

In Fig.7 ist in schematischer Darstellung das Verfahren zur Verbindung des Klettbandes 16 mit einer den Stützkörper 7 bedeckenden Deckschicht 19 gezeigt. Eine mit einer Heizanordnung 41, z.B. Heizpatronen 42, versehene Preßmatrize 43 ist über eine Vorschubvorrichtung 44, z.B. einem druckbeaufschlagten Zylinder 45, in Richtung des auf der Deckschicht 19 vorpositionierten Klettbandes 16 - Pfeil 46 - verfahrbar. Das Klettband 16 kann dabei durch den Kleber 33, z.B. einem wärmeaktivierbaren Kleber auf der Deckschicht 19 vorpositioniert gehaltert sein. Über eine den Heizpatronen 42 vorgeordneten Steuer- und Regeleinrichtung 47 wird die Heizanordnung 41 von einer Energieversorgung 48 über Leitungen 49 und 50 mit elektrischer Energie versorgt. In der Preßmatrize 43 ist ein Temperaturfühler 51 angeordnet und über die Leitung 52 mit der Steuer- und Regeleinrichtung 47 in Verbindung. Dadurch kann die Energiezufuhr zur Erreichung einer konstanten, für das Verfahren erforderlichen Temperatur der Preßmatrize 43 geregelt werden.

Über ein weiteres Regelglied, z.B. eine Zeituhr 53, und über ein Ventil 54 kann ein Druckversorgungssystem 55 für den Zylinder 45 angesteuert werden und damit eine Haltezeit der Preßmatrize 43 für das Schmelzverbinden des Klettbandes 16 mit der Deckschicht 19 erreicht werden. Über ein in der Druckleitung 56 zum Zylinder 45 angeordnetes Überdruckventil 57 kann auch die für das Verfahren geeignete Preßkraft - Pfeil 58 - geregelt werden, wodurch alle das Verfahren beeinflussenden Parameter entsprechend den zu verbindenden Materialien vorgewählt werden können.

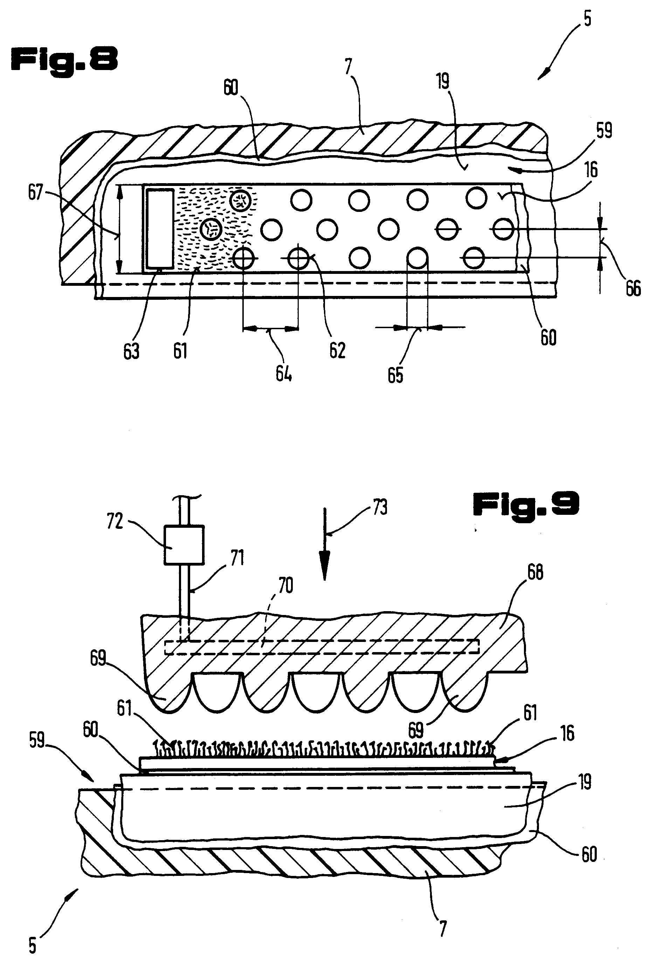

In Fig.8 und 9 ist von einem Sitzpolster 5 eine Unterseite 59 gezeigt. Diese Unterseite 59 wird durch eine Deckschicht 19, beispielsweise aus einem flammhemmenden Material, einem Netz, Gewirke oder Vlies aus Natur- bzw. Kunstfasern gebildet und ist auf einem Stützkörper 7, beispielsweise unter Zwischenschaltung einer Kleberschicht 60, befestigt. Auf dieser Deckschicht 19 ist eine Verbindungsvorrichtung zur Verbindung derselben mit dem in Fig.2 gezeigten Bezugstoff 15 angeordnet, die durch ein Klettband 16 gebildet ist. Dieses Klettband 16 ist an seiner Oberseite mit Klettfäden 61 versehen, die beim Draufdrücken eines Gegenteils sich mit diesem verhaken und damit eine sichere Befestigung bzw. Verbindung zwischen zwei Teilen zulassen. Um nun eine hohe Sicherheit gegen ein unbeabsichtigtes Ausreißen bzw. Ablösen der Verbindungsvorrichtung bzw. des Klettbandes 16 von der Deckschicht 19 zu verhindern, ist das Klettband 16 in Verbindungsbereichen 62,63 mit der Deckschicht 19 verbunden. Dazu wird das Klettband 16 über eine Kleberschicht 60 auf der Deckschicht 19 positioniert. Das Positionieren kann beispielsweise aber auch über Klammern oder sonstige Hilfsmittel erfolgen. Danach werden in den Verbindungsbereichen 62,63 in welchen das Klettband 16 mit thermisch verformbaren Materialien versehen ist bzw. zur Gänze aus solchen thermisch verformbaren Materialien besteht, erhitzt, wobei die Klettfäden, wie dies schematisch in der Zeichnung durch eine unterschiedliche Darstellung gezeigt ist, verformt werden, wodurch gegebenenfalls ihre Hafteigenschaft verringert werden kann. Die Verbindungsbereiche 62 und 63 können nun unterschiedlich ausgeführt sein, es ist aber auch ebenso möglich, mit gleichartigen bzw. angeordneten Verbindungsbereichen das Auslangen zu finden.

Im vorliegenden Ausführungsbeispiel sind die Verbindungsbereiche in einem Abstand 64 angeordnet, der ein Mehrfaches eines Durchmessers 65 der Verbindungsbereiche 62 beträgt. Die Reihen der Verbindungsbereiche 62 sind gegeneinander jeweils um die halbe Teilung versetzt und sind in einem Querabstand 66 angeordnet, der geringfügig größer sein kann, als der Durchmesser 65 der Verbindungsbereiche 62.

Damit wird ein Raster von Befestigungs- bzw. Verbindungsstellen zwischen dem Klettband 16 und der Deckschicht 19 geschaffen, wobei durch die in den Verbindungsbereichen 62 auf das Klettband aufgebrachte Wärmeenergie die über dem Plastifizierungs- bzw. wenn nötig sogar über dem Schmelzpunkt der Materialien im Verbindungsbereich liegt, ein Fließen bzw. Verformen des Klettbandes 16 stattfindet, wodurch dieses Material in die darunter liegende Deckschicht 16 eingepreßt wird bzw. einfließt und somit eine gute Verankerung des Klettbandes in der Deckschicht 19 bewirkt.

Durch die Gesamtfläche der Verbindungsbereiche 62 im Verhältnis zur Gesamtfläche des Klettbandes 16 kann auch die Haftkraft der Verbindungsvorrichtung verändert werden, insbesondere dann, wenn der Flächenanteil der Verbindungsbereiche 62 bzw. 63 einen großen Anteil der Gesamtfläche des Klettbandes 16 ausmacht. Dadurch ist die Gefahr, daß das Klettband 16 beim Ablösen des Bezugstoffes 15 von der Deckschicht 19 abgerissen bzw. losgerissen werden kann, verringert.

Als vorteilhaft hat es sich hierbei erwiesen, den Verbindungsbereich 63 im stirnseitigen Endbereich des Klettbandes 16 über die gesamte Breite 67 des Klettbandes anzuordnen, sodaß auch im hochbelasteten Endbereich eine Ablösung des Klettbandes 16 von der Deckschicht 19 zuverlässig verhindert ist.

Selbstverständlich ist es möglich, die Rasterteilung der Verbindungsbereiche 62 beliebig zu verändern und bei geringen Beanspruchungen weniger Verbindungsbereiche pro Flächeneinheit des Klettbandes 16 vorzusehen und es ist andererseits auch möglich, jede beliebige Flächenform für die Verbindungsbereiche anstelle der kreisrunden Ausführungsvariante einzusetzen.

In Fig.9 ist der Sitzpolster 5 in Stirnansicht gezeigt, wobei wiederum der Stützkörper 7 die Kleberschicht 60, die Deckschicht 19 und das Klettband 16 sowie die das Klettband 16 mit der Deckschicht 19 verbindende Kleberschicht 60 zu ersehen ist. Des weiteren ist ersichtlich, daß die Klettfäden 61 des Klettbandes 16 noch unverformt sind. Oberhalb des Klettbandes 16 ist ein Preßstempel 68 dargestellt, der mit Vorsprüngen 69 bzw. Preßnasen versehen ist. Diese Vorsprünge 69 weisen im wesentlichen einen den Verbindungsbereichen 62 und 63 entsprechenden Querschnitt auf, sind jedoch an ihrer Unterseite in Art einer Kugelkalotte bzw. mit einem ellipsenförmigen Querschnitt ausgebildet. Der gesamte Preßstempel 68 ist mittels Heizstäbe 70, von welchen einer gezeigt ist, beheizt, die über Leitungen 71 mit einer Steuervorrichtung 72 zum Regeln und Überwachen der Temperatur verbunden sind. Die Steuervorrichtung 72 ist mit einer Energiequelle, beispielsweise einem Stromversorgungsnetz eines Elektroversorungsunternehmens, verbunden.

Der Preßstempel 68 wird nun mit den Heizstäben 70 auf eine Temperatur zwischen 60°C und 200°C, bevorzugt 100°C aufgeheizt. Diese Temperatur bewirkt, daß der Kunststoff des Klettbandes, der zumindest in den Verbindungsbereichen 62 und 63 angeordnet ist, plastifiziert wird bzw. zu schmelzen beginnt und in die darunter liegende Faserstruktur der Deckschicht 19 eindringen kann. Dies wird durch die mit dem Preßstempel 68 aufgebrachte Druckkraft 73 - durch einen Pfeil symbolisch angedeutet unterstützt, sodaß auch der plastifizierte Kunststoff in das darunter liegende Gewebe hineingedrückt wird. Gleichzeitig wird dabei aber auch der Kleber in der Kleberschicht 60 erwärmt und ändert damit sein Fließverhalten, wobei durch die ausgeübte Druckkraft und die Temperatureinwirkung eine gleichmäßige Verteilung des Klebers erreicht bzw. dieser auch tiefer in die Deckschicht 19 hineingepreßt wird, sodaß ein inniges Verkrallen und Verbinden zwischen dem Kleber und der Deckschicht 19 bzw. dem Klettband 16 erfolgt.

Sollte es aus Taktzeitgründen nicht möglich sein, daß Verfließen des Klebers der Kleberschicht 60 abzuwarten, so ist es auch möglich, daß nach der Verbindung des Klettbandes 16 mit der Deckschicht 19 in den Verbindungsbereichen 62 und 63 der Sitzpolster 5 mit dem aufgebrachten Klettband 16 durch einen Wärmetunnel hindurchbewegt wird, in dem über eine entsprechende längere Zeitdauer eine Temperatur zwischen 100°C und 200°C einwirken kann, sodaß der Kleber der Kleberschicht 60 vollständig erweicht.

Nach dem Austreten aus dem Heiztunnel ist es dann auch möglich, kurzfristig eine Druckbelastung auf den Sitzpolster 5 aufzubringen, sodaß sich die Kleberschicht gleichmäßig in das Gewebe verteilen kann und eine verstärkte Haftung zwischen dem Klettband 16 und der Deckschicht 19 erreicht wird.

Eine besonders innige Verbindung zwischen dem Klettband 16 und der Deckschicht 19 wird dann erzielt, wenn die Deckschicht 19 eine möglichst glatte Oberfläche in Fließform oder als Gewirke aufweist.

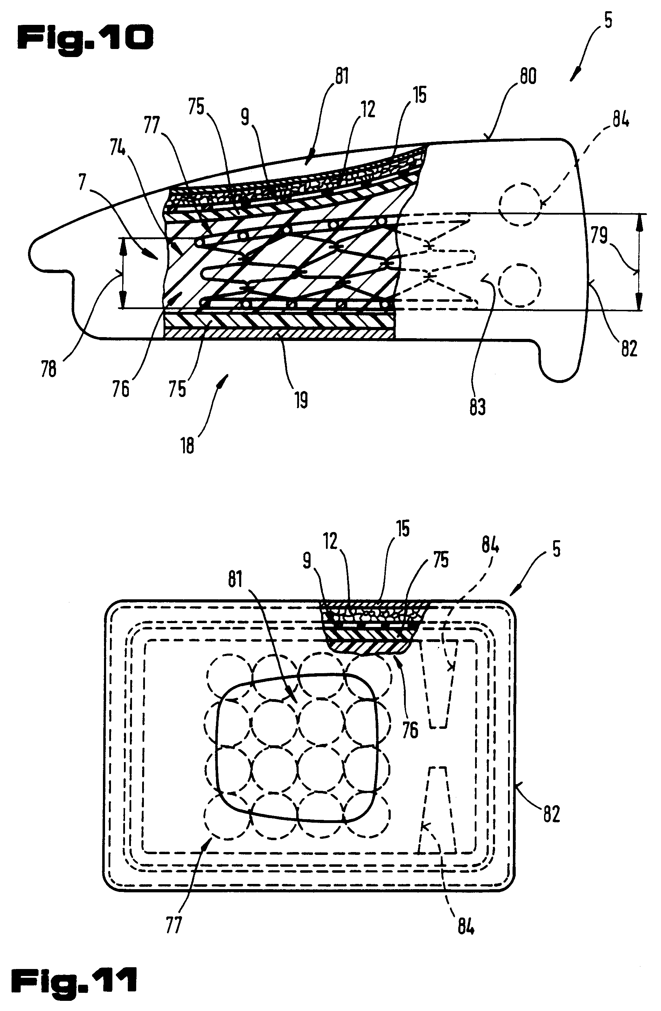

In Fig. 10 ist eine andere Ausführungsvariante eines Sitzpolsters 5 gezeigt.

Der Stützkörper 7 des Sitzpolsters 5 besteht aus einem Zentralteil 74, eine diesen Zentralteil umgebende Hüllschicht 75 und im Bereich der Oberseite und der Seitenflächen des Sitzpolsters 5 aus einer Zwischenschicht 9, einer Flammschutzschicht 12 und dem Bezugstoff 15. Auf einer Unterseite 18 des Sitzpolsters 5 ist direkt auf den Stützkörper 7 die Deckschicht 19 angeordnet.

Dem Zentralteil 74 des Sitzpolsters 5 besteht aus einem Schaumkern 76 mit einem relativ hohen Raumgewicht zwischen 60 kg und 150 kg pro m³. Bevorzugt beträgt das Raumgewicht 90 kg pro m³. In diesen Schaumkern 78 ist ein Federkern 77 eingeschäumt. Dieser Federkern 77 weist in einer dein Polster 4, insbesondere dem Rückenpolster zugewandte Höhe 78 auf, die geringer ist, als eine Höhe 79 die den Knien des Benutzers näher liegt. diese unterschiedlichen Höhen 78 und 79 des Federkerns 77 können durch eine entsprechende Herstellung des Federkerns 77 oder durch eine Verformung des federkerns 77 während der Herstellung des Schaumkerns 76 erzielt werden.

Dieser durch das hohe Raumgewicht relativ harte Schaumkern 76 ist von der Hüllschicht 75 umgeben, die eine Dicke zwischen 1 cm bis 5 cm, bevorzugt 3 cm aufweisen kann. Das Raumgewicht dieser Hüllschicht 75 ist erheblich geringer, als das des Schaumkerns 76 und beträgt beispielsweise 40 kg bis 45 kg pro m³. Damit wird für den Benutzer eines derartigen Polsters 4 ein angenehmes Sitzklima geschaffen, da im ersten Moment ein weiches nachgeben des Sitzpolsters 5 ermöglicht ist. Mit zunehmender Sitztiefe wird der Widerstand fester, sodaß ein gutes Sitzgefühl besteht.

Diese Steigerung des Sitzwiderstandes wird zusätzlich durch die Anordnung der aus Kunststoffschaum bestehenden und ebenfalls relativ weichen Flammschutzschicht 12 unterstützt.

Andererseits wird aber ein Zusammenfallen der Schaumschichten durch die relativ schwere und damit widerstandsfähige Kernschicht verhindert.

Um weiters ein Vorrutschen des Benutzers und eine verschobene Belastung am Sitzpolster 5 zu verhindern, kann in einer Oberseite 80 des Sitzpolsters 5 eine Vertiefung 81 vorgesehen sein, die zusätzlich zu der schräg nach vorne ansteigenden Ausbildung des Sitzpolsters 5 ein Vorrutschen in Richtung einer vom Polster 4, also dem Rückenpolster, distanzierten Stirnseite 82 des Sitzpolsters 5 verhindert wird.

Des weiteren können, wie dies schematisch durch strichlierte Linien angedeutet ist, in Seitenflächen 83 Ausnehmungen 84 angeordnet sein, die sich in das Innere des Schaumkerns 76 durch die Hüllschicht 75 hindurch erstrecken, um eine entsprechende Feuchtigkeitsabfuhr bzw. einen hohen Luftaustausch bei länger dauerndem Sitzen auf dem Sitzpolster 5 zu ermöglichen.

Durch diese Ausnehmungen 84 bzw. die Hohlräume wird bei jeder Bewegung ein entsprechendes Luftvolumen ausgetauscht, mit dem auch eine entsprechende Feuchtigkeit in Form von Wasserdampf abgeführt werden kann.

Dadurch wird verhindert, daß es vor allem beim Benutzen eines derartigen Sitzpolsters 5 in Flugzeugen, beim Anfliegen in unterschiedlichen Klimazonen bzw. bei lang andauernder Benutzung zu einer Überfeuchtung des Sitzpolsters 5 und damit zu einem Zusammenfallen des Kunststoffschaums, insbesondere des Polyurethanschaums, kommen kann. Hinsichtlich der Ausbildung dieser Ausnehmungen wird auf die parallel laufende Anmeldung der gleichen Anmelderin - WO-OS 88/09731 - verwiesen.

In Fig.11 ist eine Draufsicht auf den Sitzpolster 5 gezeigt, aus der nochmals die Ausnehmungen 84, die sich bis in den Schaumkern 76 erstrecken, ersichtlich sind. Darüber hinaus ist auch eine mögliche Form der Vertiefung 81 im Bereich des Gesässes eines Benutzers am Sitzpolster 5 gezeigt. Wie ersichtlich, läuft diese Vertiefung 81 in Richtung der Stirnseite 82 des Sitzpolsters 5 in Anpassung an die Form der Oberschenkel der Benutzer aus.

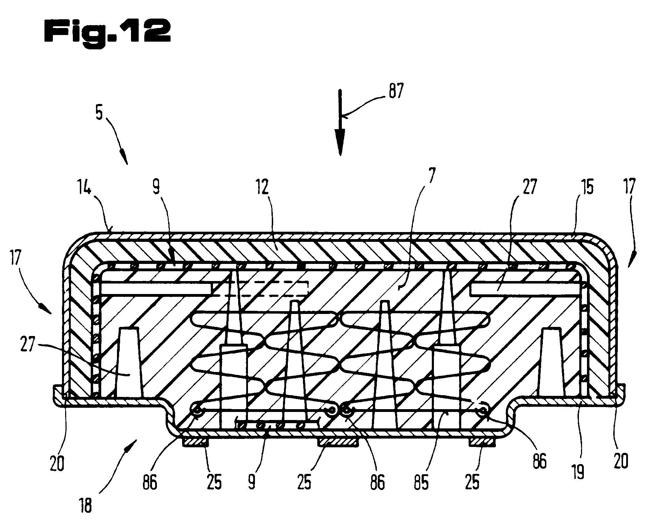

In Fig.12 ist eine andere Ausführungsform eines Sitzpolsters 5 gezeigt, der in seinem Aufbau im wesentlichen dem in den zuvor beschriebenen Ausführungsbeispielen entspricht, weshalb auch für gleiche Teile gleiche Bezugsziffern verwendet werden. Dieser Sitzpolster 5 weist, um ein Durchsitzen des Stützkörpers 7 und ein durch diese Überbelastung erfolgendes Zusammenbrechen des Schaumkerns hintanzuhalten, einen Federkern 85 auf. Auf der Unterseite 18 des Sitzpolsters 5 ist wiederum eine Deckschicht 19 angeordnet, während die Flammschutzschicht 12 im Bereich der Sitzfläche 14 durch einen flammfesten Bezugstoff 15 abgedeckt ist, der sich auch über die Seitenflächen 17 des Sitzpolsters 5 erstreckt. Die Kanten 20 werden wieder von der Deckschicht 19 übergriffen, wodurch die schon zuvor beschriebenen Vorteile bestehen. Zwischen der Flammschutzschicht 12 und dem Stützkörper 7 ist eine Zwischenschicht 9 aus nicht brennbaren bzw. hochtemperaturbeständigen Fasern bzw. Fäden angeordnet. Wie aus der schematischen Darstellung des Federkerns 85 zu ersehen ist, weist dieser Verbindungsstellen 86 zwischen den einzelnen Teilen des Federkerns auf. Im Bereich dieser Verbindungsstellen 86 wird eine bei Belastung des Sitzes in Richtung des Pfeiles 87 relativ hohe Belastung auf die Schicht des Stützkörpers zwischen dem der Unterseite 18 zugewandten Ende des Federkerns 85 und der Deckschicht 19 ausgeübt. Um in diesem Bereich ein Durchbrechen des Stützkörpers 7 bzw. ein Durchreißen der Deckschicht 19 zu verhindern, sind Verstärkungsauflagen 25 angeordnet, die streifenförmig ausgebildet sein können.

Selbstverständlich ist es anstelle der Anordnung der Verstärkungsstreifen auf der vom Stützkörper 7 abgewendeten Seite der Deckschicht auch möglich, diese zwischen der Deckschicht 19 und dem Stützkörper 7 anzuordnen.

Des weiteren können auch bei mit den erfindungsgemäßen Flammschutzschichten versehenen Sitzpolstern 5 im Stützkörper 7 Ausnehmungen 27 angeordnet sein, um die Durchlüftung und damit die Feuchtigkeitsabfuhr vor allem dann, wenn der Sitz für längere Reisen beispielsweise Langstreckenflügen, im Einsatz ist, zu gewährleisten.

Des weiteren ist in Fig.12 im Bereich der Unterseite 18 des Sitzpolsters 5 angedeutet, daß zwischen der Deckschicht 19 und dem Stützkörper 7 ebenfalls eine Zwischenschicht 9 in der zuvor bereits beschriebenen Art, bestehend aus hochtemperaturfesten Fasern bzw. Fäden, angeordnet sein kann.

Generell ist festzuhalten, daß für den schwer entflammbaren Bezugstoff 15 Verbindungen zwischen Baumwolle und Polyester, z.B. 81 % Baumwolle und 19% Polyester, aber auch Bezugstoffe aus 59% Wolle, 33% Baumwolle und 8% Polyester Verwendung finden können.

Der Kunststoffschaum, aus dem der Stützkörper 7 besteht, kann durch einen Formkaltschaum gebildet sein, der bevorzugt ein Raumgewicht zwischen 15 und 60 kg/m³, bevorzugt 40 kg/m³ aufweist. Dieser Stützkörper ist desweiteren mit einem pulverförmigen Flammschutzmittel 8 versetzt, welches aus Melaminharz und bzw. oder Aluminiumhydroxyd oder einer Mischung der beiden bestehen kann.

Die Zwischenschicht 9 wird bevorzugt aus Glas- bzw. Kohlefasermatten gebildet, die ein Gewicht von 150 bis 350 g/m² aufweisen können. Dadurch wird ein günstiges Verhalten zwischen dem Gewichtszuwachs bei der Verwendung dieser Zwischenschicht 9 und deren Flammschutzwirkung erreicht. Es können aber auch Zwischenschichten 9 mit einem anderen Gewicht verwendet werden.

Selbstverständlich können die hochtemperaturfesten Fäden bzw. Fasern in beliebiger Art untereinander verbunden sein. So können Gewebe und Gewirke aus diesen Fasern oder Fäden oder aus derartigen Fasern bestehenden Fäden verwendet werden, und es können andererseits die unterschiedlichsten Materialien einzeln oder vermischt miteinander zur Anwendung kommen, um den von außen einwirkenden Flammen einen möglichst hohen Widerstand über längere Zeit entgegenzusetzen. Bevorzugt werden als Grundmaterialien für die Fäden und Fasern jedoch Glas, Keramik, Graphit oder hochtemperaturfeste Metalle verwendet.

Je nach der erzielten Maschenweite bei den Gewirken, Geweben, Netzen oder Gittern der hochtemperaturfesten Fasern bzw. Fäden entsteht eine sogenannte Siebwirkung, die verhindert, daß die Flamme über dieses Sieb durch die kleinen Öffnungen nicht hinaustreten kann, und dadurch wird der direkte Abbrand im Bereich des hinter der Zwischenschicht 9 angeordneten Stützkörpers 7 verringert. Andererseits kann eine Flammentwicklung im Inneren des Stützköpers nicht von innen her auf andere Bereiche des Bezugstoffes nach außen übergreifen, wodurch der Luftzutritt in diesen Bereichen für die Flamme im Stützkörper nicht vergrößert werden kann und damit die Ausbreitung eines Feuers im Sitz zusätzlich vermindert wird.

Die Flammschutzschicht 12 besteht bevorzugt aus einem Schaumkunststoff mit einem Raumgewicht von ca. 20 bis 60 kg/m³. Meist wird ein Polyätherschaum verwendet. Aus diesem Polyätherschaum werden Blöcke hergestellt und nach der Aufschäumung werden diese in Platten oder Bahnen mit der gewünschten Schichtstärke geschnitten. Diese Platten werden dann mit einem flüssigen Flammschutzmittel getränkt, wobei als Flammschutzmittel ein Polyurethan der Type 64 (Firma Bayer) verwendet werden kann, von welchen Gewichtsteile mit 80 Gewichsteilen Al (OH)3 vermischt werden. Dieses Aluminiumoxydhydrat wird in das Polyurethan eingerührt.

Selbstverständlich ist es im Rahmen der Erfindung möglich, über die gezeigten Ausführungsbeispiele hinaus die Anordnung der Einzelelemente beliebig zu verändern bzw. auch unterschiedlich zu kombinieren.

Auch Einzelmerkmale aus den gezeigten Ausführungsbeispielen können eigenständige erfindungsgemäße Lösungen darstellen.

### Bezugszeichenaufstellung

- 1: Doppelsitzbank
- 2: Sitz
- 3: Sitz
- 4: Polster
- 5: Sitzpolster
- 6: Traggestell
- 7: Stützkörper
- 8: Flammschutzmittel
- 9: Zwischenschicht
- 10: Faden
- 11: Faden
- 12: Flammschutzschicht
- 13: Kleber
- 14: Sitzfläche
- 15: Bezugstoff
- 16: Klettband
- 17: Seitenfläche
- 18: Unterseite
- 19: Deckschicht
- 20: Kante
- 21: Kante
- 22: Kante
- 23: Kante
- 24: Teil
- 25: Verstärkungsauflage
- 26: Tragholm
- 27: Ausnehmung
- 28: Verbindungsvorrichtung
- 29: Trägerband
- 30: Oberfläche
- 31: Verankerungsteil
- 32: Verbindungsfläche
- 33: Kleber
- 34: Verbindungsbereich
- 35: Tiefe
- 36: Dicke
- 37: Dicke
- 38: Seitenfläche
- 39: Stempel
- 40: Seitenkante
- 41: Heizanordnung
- 42: Heizpatrone
- 43: Preßmatritze
- 44: Vorschubvorrichtung
- 45: Zylinder
- 46: Pfeil
- 47: Steuer-u.Regeleinrichtung
- 48: Energieversorgung
- 49: Leitung
- 50: Leitung
- 51: Temperaturfühler
- 52: Leitung
- 53: Zeituhr
- 54: Ventil
- 55: Druckversorgungssystem
- 56: Druckleitung
- 57: Überdruckventil
- 58: Pfeil
- 59: Unterseite
- 60: Kleberschicht
- 61: Klettfäden
- 62: Verbindungsbereich
- 63: Verbindungsbereich
- 64: Abstand
- 65: Durchmesser
- 66: Querabstand
- 67: Breite
- 68: Preßstempel
- 69: Vorsprung
- 70: Heizstab
- 71: Leitung
- 72: Steuervorrichtung
- 73: Druckkraft
- 74: Zentralteil
- 75: Hüllschicht
- 76: Schaumkern
- 77: Federkern
- 78: Höhe
- 79: Höhe
- 80: Oberseite
- 81: Vertiefung
- 82: Stirnseite
- 83: Seitenfläche
- 84: Ausnehmung
- 85: Federkern
- 86: Verbindungsstelle
- 87: Pfeil

## Patentansprüche

1. Sitz (2, 3) für Fahrzeuge, mit einem Polster (4) aus Schaumkunststoff, der einen aus einem offenzelligen, elastischen Kunststoffschaum gebildeten Stützkörper (7) aufweist, welcher zumindest im Bereich einer Sitzfläche (14) mit einem schwer entflammbaren Bezugstoff (15) sowie im Bereich einer der Sitzfläche (14) gegenüberliegenden Unterseite (18, 59) mit einer flammhemmenden bzw. flammfesten Deckschicht (19) überzogen ist, dadurch gekennzeichnet, daß der Stützkörpers (7) mit der der Sitzfläche (14) gegenüberliegenden Unterseite (18, 59) direkt auf die aus einem Gewebe bzw. Gewirke oder Vlies gebildete Deckschicht (19) aufgeklebt oder aufgeschäumt ist und daß die Deckschicht (19) zumindest die Kanten (20 bis 23) zwischen der Unterseite (18, 59) und einer Seitenfläche (17) sowie gegebenenfalls zwischen der Seitenfläche (17) und der Sitzfläche (14) übergreift.

2. Sitz nach Anspruch 1, dadurch gekennzeichnet, daß zwischen dem Stützkörper (7) und der Deckschicht (19) eine Zwischenschicht (9) angeordnet ist.

3. Sitz nach Anspruch 1 oder 2, dadurch gekennzeichnet, daß einzelne Bereiche der Deckschicht (19) auf der vom Stützkörper (7) abgewendeten Seite mit einer Verstärkungsauflage (25) versehen sind.

4. Sitz nach einem oder mehreren der vorhergehenden Ansprüche, dadurch gekennzeichnet, daß die Verstärkungsauflagen (25) zumindest im Bereich von Verbindungsstellen (86) zwischen einzelnen Teilen eines im Stützkörper (7) integrierten Federkerns (85) angeordnet sind.

5. Sitz nach einem oder mehreren der vorhergehenden Ansprüche, dadurch gekennzeichnet, daß die Zwischenschicht (9) durch ein Netz oder Gewirke oder Gitter aus Fäden und/oder Fasern oder einem schwer entflammbaren Stoff gebildet ist und eine Maschenweite der Gitter bzw. Netze oder Gewirke ca. 0,5 bis 8 mm, bevorzugt 3 mm beträgt.

6. Sitz nach einem oder mehreren der vorhergehenden Ansprüche, dadurch gekennzeichnet, daß die Fasern bzw. Fäden (10, 11) aus Glas und bzw. oder Keramik und bzw. oder Metall und bzw. oder Kohle bestehen.

7. Sitz nach einem oder mehreren der vorhergehenden Ansprüche, dadurch gekennzeichnet, daß der Stützkörper (7) einstückig ausgebildet ist und der Kunststoffschaum des Stützkörpers (7) mit einem pulverförmigen Flammschutzmittel (8) versetzt ist.

8. Sitz nach einem oder mehreren der vorhergehenden Ansprüche, dadurch gekennzeichnet, daß der Stützkörper (7) aus einem Kunststoffschaum mit einheitlichem Raumgewicht von in etwa 15-60 kg/m³ besteht.

## Claims

1. Vehicle seat (2, 3) with upholstery (4) made from expanded plastic, having a supporting body (7) made from an open-cell elastic plastic foam, which is covered with a flame-resistant cover material (15) at least in the region of a seating surface (14) and with a flame-retardant or non-flammable covering layer (19) in the region of a bottom face (18, 59) opposing the seating surface (14), characterised in that the supporting body (7) is bonded or expanded onto the bottom face (18, 59) opposing the seating surface (14), directly onto a covering layer (19) made from a woven fabric or knitted fabric or matting and in that the covering layer (19) overlaps edges (20 to 23) between the bottom face (18, 59) and a side face (17) and optionally between the side face (17) and the seating surface (14).

2. Seat according to claim 1, characterised in that an intermediate layer (9) is arranged between the supporting body (7) and the covering layer (19).

3. Seat according to claim 1 or 2, characterised in that individual regions of the covering layer (19) on the side facing away from supporting body (7) are provided with a reinforcing bearing (25).

4. Seat according to one or more of the preceding claims, characterised in that the reinforcing bearing (25) is disposed at least in the region of connecting points (86) between individual parts of a spring core (85) integrated in the supporting body (7).

5. Seat according to one or more of the preceding claims, characterised in that the intermediate layer (9) consists of a netting or fabric or lattice of threads and/or fibres or a flame-retardant material and the mesh width of the lattice or fabric or netting is approximately 0.5 to 8 mm, preferably 3 mm.

6. Seat according to one or more of the preceding claims, characterised in that the fibres or threads (10, 11) are glass and/or ceramic and/or metal and/or carbon.

7. Seat according to one or more of the preceding claims, characterised in that the supporting body (7) is made in a single piece and the expanded plastic of the supporting body (7) is impregnated with a powdered flame retardant (8).

8. Seat according to one or more of the preceding claims, characterised in that the supporting body (7) is made from a plastic foam with a uniform volumetric weight of approximately 15-60 kg/m³.

## Revendications

1. Siège (2, 3) pour véhicules, avec un coussin (4) en matière synthétique mousse, qui présente un corps d'appui (7) réalisé en une mousse de matière synthétique élastique à alvéoles ouverts, qui est recouvert au moins dans la zone d'une surface de siège (14) d'un tissu de revêtement (15) difficilement inflammable ainsi que dans la zone d'un côté inférieur (18, 59) opposé à la surface de siège (14) d'une couche de recouvrement ignifuge respectivement résistant aux flammes (19), caractérisé en ce que le corps d'appui (7) avec le côté inférieur (18, 59) opposé à la surface de siège (14) est collé ou moussé sur la couche de recouvrement (19) formée par un tissu respectivement tissu maille ou une nappe, et en ce que la couche de recouvrement (19) passe au moins sur les arêtes (20 à 23) entre le côté inférieur (18, 59) et une face latérale (17) et le cas échéant entre la face latérale (17) et la surface de siège (14).

2. Siège selon la revendication 1, caractérisé en ce qu'il est disposé entre le corps d'appui (7) et la couche de recouvrement (19) une couche intermédiaire (9).

3. Siège selon la revendication 1 ou 2, caractérisé en ce que des zones isolées de la couche de recouvrement (19), sur le côté éloigné du corps d'appui (7), sont pourvues d'une couche de renforcement (25).

4. Siège selon l'une ou plusieurs des revendications précédentes, caractérisé en ce que les couches de renforcement (25) sont disposées au moins au voisinage d'emplacements de liaison (86) entre les différentes parties d'un noyau hélicoïdal (85) intégré dans le corps d'appui (7).

5. Siège selon l'une ou plusieurs des revendications précédentes, caractérisé en ce que la couche intermédiaire (9) est formée par un filet ou un tissu maille ou une grille en fils et/ou fibres ou par un tissu difficilement inflammable, et qu'une largeur de maille des grilles respectivement filets ou tissus maille est d'environ 0,5 à 8 mm, de préférence de 3 mm.

6. Siège selon l'une ou plusieurs des revendications précédentes, caractérisé en ce que les fibres respectivement fils (10, 11) sont en verre et respectivement ou céramique et respectivement ou métal et respectivement ou carbone.

7. Siège selon l'une ou plusieurs des revendications précédentes, caractérisé en ce que le corps d'appui (7) est réalisé en une pièce et que la mousse de matière synthétique du corps d'appui (7) est mélangée avec un agent ignifuge pulvérulent (8).

8. Siège selon l'une ou plusieurs des revendications précédentes, caractérisé en ce que le corps d'appui (7) est constitué d'une mousse de matière synthétique d'un poids spécifique uniforme d'approximativement 15-60 kg/m³.
